# EUROPEAN PATENT SPECIFICATION

(11) **EP 4 226 818 B1**
(45) Date of publication and mention of the grant of the patent: **23.07.2025**
(21) Application number: 22798510.8
(22) Date of filing: 11.02.2022
(51) Int. Cl.: A47J 31/00, A47J 31/46, A47J 31/44

(54) **TEMPERATURE PRE-ADJUSTING SYSTEM, BEVERAGE BREWING DEVICE, AND TEMPERATURE PRE-ADJUSTING METHOD**
TEMPERATURVOREINSTELLUNGSSYSTEM, GETRÄNKEBRÜHVORRICHTUNG UND TEMPERATURVOREINSTELLUNGSVERFAHREN
SYSTÈME DE PRÉRÉGLAGE DE TEMPÉRATURE, DISPOSITIF D'INFUSION DE BOISSON ET PROCÉDÉ DE PRÉRÉGLAGE DE TEMPÉRATURE

(30) Priority: 07.05.2021 CN 202110497399
(43) Date of publication of application: 16.08.2023
(73) Proprietor: Suzhou Industrial Park Kalerm Electric Appliances Co., Ltd, Suzhou, Jiangsu 215000 (CN)
(72) Inventor: ZHU, Meisheng, Jiangsu 215000 (CN); WANG, Zhaoliang, Jiangsu 215000 (CN)
(74) Representative: Murgitroyd & Company
(86) International application number: PCT/CN2022/076108
(87) International publication number: WO 2022/233168

(56) References cited:
- EP-A1- 3 643 210
- EP-B1- 3 192 406
- CN-A- 101 600 377
- CN-A- 107 902 784
- CN-A- 108 478 012
- CN-U- 207 506 404
- CN-U- 209 252 476
- CN-U- 210 871 092
- JP-A- H0 696 354
- US-A1- 2011 252 976
- US-B2- 9 107 538

## Description

### TECHNICAL FIELD

The present invention belongs to the field of beverage brewing device technologies, and in particular, relates to a temperature pre-adjusting system, a beverage brewing device, and a temperature pre-adjusting method.

### BACKGROUND

Obtaining a beverage with rich taste by a brewing means has a long history in human history, which is not only a culture, but also a daily life of society. People used to make tea or brew coffee manually, but now with progress of mechanical automation and acceleration of the pace of life, application of beverage brewing devices is becoming more and more popular, some are used in office places, and some are used at home. In addition, a taste requirement of a beverage made by a beverage brewing device is increasingly high, and thus technical improvement requirements in the field are also increasingly strong. A beverage of coffee is used as an example in the present application. Coffee beverages (such as espresso coffee, cappuccino, milk coffee, white coffee, or perfumed flavored coffee) are very popular today, and may be obtained in various ways, especially in terms of their original mixtures and methods of extraction beverages. A coffee machine for making coffee beverages and a method for making coffee beverages in a coffee machine have been widely known in a conventional technology. In a common coffee machine, hot water at a specific temperature is introduced into a brewing unit or a brewing container containing ground coffee at a specific pressure, and after brewing, coffee is introduced into a cup through an output pipe for drinking. Such coffee beverages and their blends and flavors depend heavily on a temperature and pressure of water flowing through the ground coffee, especially the water temperature. If the water temperature is too high in an extraction process, excessive extraction is caused, resulting in a bitter taste of coffee; conversely, if the water temperature is too low, a sour and light taste of coffee is obtained. Stability and consistency of the taste of the coffee are directly depending on the stability of the water temperature, and various types of coffee machines are designed with an emphasis on researching a water temperature testing structure and a control method to improve the stability of the water temperature.

Similarly, in preparation for an iced beverage, a large amount of ice cubes are usually added to perform temperature adjustment after the beverage is made. On the one hand, the addition of the ice cubes reduces concentration of the beverage; on the other hand, the ice cubes are melted for a period of time, which affects drinking timeliness and reduces satisfaction of drinking experience.

In practice, due to an impact of an ambient temperature, especially in winter or summer and other ambient temperature extreme conditions, water with a set temperature entering a brewing unit may deviate from its original temperature due to heat convection or cold convection. For example, after the brewing unit is left laying for a period of time, there is a large difference between an actual temperature and a set temperature of the first cup of a beverage. The large difference causes a brewing water temperature deviation, affecting a brewing effect, and further affecting quality of the beverage; and the large difference also causes a temperature deviation of the beverage entering a cup, affecting the taste and reducing an experience effect.

Patent application document No. JPH06096354A provides a regular coffee manufacturing device which maintains good quality and taste and vends coffee without spoiling the flavor of coffee extracted by a coffee brewer. A drain pipeline which is connected to a waste water container through a changeover valve is branched and connected to a drink supply pipeline led out of the coffee brewer and the cylinder of the brewer is provided with a temperature sensor. If the cylinder is not hot enough at the time of vending, hot water is fed to the brewer based on the signal of the temperature sensor prior to a drink extracting process to preheat the cylinder, and the changeover valve is switched to the side of the drain pipeline to discharge the preheating hot water to the waste water container.

Therefore, it is necessary to study and design and provide a temperature pre-adjusting system that can be applied to a beverage brewing device.

### SUMMARY

In view of the foregoing shortcomings in the conventional technology, the present invention aims to provide a temperature pre-adjusting system for a beverage brewing device. Before a beverage is made, temperature pre-adjusting needs to be performed on a part, such as a brewing unit, where the beverage passes. Fluid in pipelines is controlled to make a temperature adjusting medium and the beverage output through different pipelines, to prevent the temperature adjusting medium from entering a beverage cup as far as possible, ensuring taste and quality of the beverage. In the present application, heat conduction benefit is used to perform temperature adjusting on a brewing unit or a related pipeline, for example, the temperature adjusting medium in the present application may be water or a beverage at a specific temperature.

To implement the foregoing invention objectives, the present invention provides the following technical solutions:

A temperature pre-adjusting system for a beverage brewing device is provided, including a host control unit, a brewing unit, and a first fluid pipeline, a second fluid pipeline, a third fluid pipeline, and a control component. One end of the first fluid pipeline is connected to the brewing unit and configured to output a beverage from the brewing unit to a beverage outlet. One end of the second fluid pipeline is connected to the brewing unit and configured to provide a temperature adjusting medium for the brewing unit; and one end of the third fluid pipeline is connected to the brewing unit or the first fluid pipeline and configured to discharge the temperature adjusting medium that has performed a temperature adjusting function. The control component is connected to a pipeline and configured to control on-off of the first fluid pipeline and the third fluid pipeline, and the control component is controlled by the host control unit. One end of the third fluid pipeline is connected to the first fluid pipeline at a connection point which is located between the brewing unit and the beverage outlet, and the other end is directly or indirectly connected to a collection container. The control component is a pump, and the pump is disposed on the third fluid pipeline. The temperature pre-adjusting system is further provided with a flowmeter, the flowmeter is disposed on the third fluid pipeline, and the host control unit controls the pump by setting a preset flow, so as to control an on-off switching time of the first fluid pipeline and the third fluid pipeline.

In a scenario where temperature adjusting is required, such as before preparing a beverage, the temperature adjusting medium is input into the brewing unit through the second fluid pipeline, the first fluid pipeline is configured to be off to prevent residual liquid or temperature adjusting medium in the first fluid pipeline from flowing out through the beverage outlet, and the third fluid pipeline is configured to be on to make the temperature adjusting medium flowing through the brewing unit be discharged through the third fluid pipeline. During output of the beverage, the control component controls the third fluid pipeline to be off and the first fluid pipeline to be on, to make the beverage output through the first fluid pipeline. Preferably, the temperature adjusting medium is water with a specific temperature.

One end of the third fluid pipeline is connected to the first fluid pipeline at a connection point which is located between the brewing unit and the beverage outlet, and the other end is directly or indirectly connected to a collection container, so that the temperature adjusting medium that has performed a temperature pre-adjusting function and residual liquid that are in the brewing unit, the first fluid pipeline, and the third fluid pipeline are discharged into the collection container to prevent contamination.

The second fluid pipeline is configured to provide a temperature adjusting medium for the brewing unit and the first fluid pipeline. The third fluid pipeline is configured to discharge the temperature adjusting medium in a pipeline between the brewing unit and the connection point of the first fluid pipeline and the third fluid pipeline. The timer is controlled by the host control unit, and the flowmeter is disposed on the third fluid pipeline. The host control unit controls the control component by setting a predetermined time or a preset flow, for example, setting a specific time or specific flow according to a length of a pipeline in the beverage device and the like, to control an on-off switching time of the first fluid pipeline and the third fluid pipeline, so as to discharge, through the third fluid pipeline, the temperature adjusting medium in a pipeline between the brewing unit and the connection point of the first fluid pipeline and the third fluid pipeline, or even the temperature adjusting medium in the whole first fluid pipeline.

The temperature adjusting medium may be used for preheating or cooling. When the temperature adjusting medium is used for preheating, a temperature of the temperature adjusting medium entering the brewing unit ranges from 88°C to 98°C; when the temperature adjusting medium is used for cooling, the temperature of the temperature adjusting medium entering the brewing unit ranges from 4°C to 10°C.

Specifically, the temperature adjusting medium may be input into the brewing unit through the second fluid pipeline before beverage brewing or after a set interval time, to perform temperature pre-adjusting on the brewing unit. In this case, the control component controls the first fluid pipeline toward the beverage outlet to be off, the third fluid pipeline to be on, and the residual liquid and the temperature adjusting medium in the brewing unit and the first fluid pipeline are discharged into the collection container through the third fluid pipeline. When the third fluid pipeline is connected to the first fluid pipeline, the temperature adjusting medium continues to be input, so that the temperature adjusting medium is output to the first fluid pipeline without temperature change when passing through the brewing unit, thus performing temperature pre-adjusting on the first fluid pipeline. Input of the temperature adjusting medium is stopped, and then the temperature adjusting medium passes through the connection point of the first fluid pipeline and the third fluid pipeline and is discharged into the collection container through the third fluid pipeline. In this process, the timer or the flowmeter is started, and the host control unit controls the control component by setting a preset time or a preset flow, so as to control the on-off switching time of the first fluid pipeline and the third fluid pipeline, and make the temperature adjusting medium in the first fluid pipeline be discharged through the third fluid pipeline. Finally, the temperature adjusting medium in both the brewing unit and the first fluid pipeline is discharged into the collection container through the third fluid pipeline.

Optionally, the following control component may be any one of the following:

The control component is a pump, the pump is disposed on the third fluid pipeline. In this case, one end of the third fluid pipeline is connected to the first fluid pipeline at a connection point which is located between the brewing unit and the beverage outlet. When the temperature adjusting medium is discharged, a driving force is provided by the pump, and the temperature adjusting medium is pumped into the third fluid pipeline and discharged. Further, in an initial stage of beverage output, the timer or the flowmeter is used to control a delay time of the pump to be switched off, so that the temperature adjusting medium in the first fluid pipeline may also be discharged into the collection container.

The control component is a three-way valve, and the three-way valve is mounted at a joint between the first fluid pipeline and the third fluid pipeline. The three-way valve is a two-position three-way normally-open solenoid valve, and a normally-open port is connected to one end, toward the brewing unit, of the second fluid pipeline. During output of a beverage, the first fluid pipeline is configured to be unobstructed, and during discharging of the temperature adjusting medium, the third fluid pipeline is configured to be unobstructed. Further, in the initial stage of beverage output, the temperature adjusting medium still exists in the pipeline between the brewing unit and the connection point of the first fluid pipeline and the third fluid pipeline. In this case, the three-way valve is controlled to make the third fluid pipeline unobstructed, and after a time period set by the timer is reached or the flowmeter reaches a set flow, the three-way valve is switched to make the first fluid pipeline unobstructed, which can prevent the temperature adjusting medium in the pipeline from flowing into a beverage cup.

The control component comprises two-way valves, and the two-way valves include a first solenoid valve and a second solenoid valve. The first solenoid valve is mounted on the first fluid pipeline, and the second solenoid valve is mounted on the third fluid pipeline. The host control unit controls on-off switching of the first solenoid valve and the second solenoid valve. During discharging of the beverage, the first solenoid valve is switched on; and during discharging of the temperature adjusting medium, the second solenoid valve is switched on. Further, when one end of the third fluid pipeline is connected to the first fluid pipeline, and the connection point is located between the brewing unit and the beverage outlet, in the initial stage of beverage output, an on-off switching time of the first solenoid valve and the second solenoid valve is controlled depending on setting of the timer or the flowmeter, so that the temperature adjusting medium in a pipeline between the brewing unit and the connection point of the first fluid pipeline and the third fluid pipeline may also be discharged into the collection container in time.

The temperature pre-adjusting system for a beverage brewing device includes the following steps:
S1: inputting the temperature adjusting medium into the brewing unit through the second fluid pipeline for performing temperature pre-adjusting;
S2: starting the control component to make the first fluid pipeline be off and the third fluid pipeline be on, and discharging liquid or the temperature adjusting medium by using the third fluid pipeline to implement temperature pre-adjusting; and
S3: making the third fluid pipeline be off to end temperature pre-adjusting.

The host control unit controls the control component by setting a preset flow, so as to control an on-off switching time of the first fluid pipeline and the third fluid pipeline.

Before step S1, residual liquid in the first fluid pipeline is pre-discharged.

Before step S1, the residual liquid in the first fluid pipeline may be discharged in advance.

Action timing of the control component may be at a moment when step S1 is performed, or before the input temperature adjusting medium flows to the connection point of the first fluid pipeline and the third fluid pipeline.

Action timing of the control component may be at a moment when the input temperature adjustment medium flows through the connection point of the first fluid pipeline and the third fluid pipeline and does not reach the beverage outlet.

The action timing of the control component is controlled by the timer or the flowmeter.

A beverage brewing device is provided, including any one of the temperature pre-adjusting systems for a beverage brewing device described above, where the beverage brewing device may perform temperature pre-adjusting according to the foregoing temperature pre-adjusting method.

Temperature pre-adjusting timing is at a moment before brewing a beverage, or temperature pre-adjusting is performed when the beverage brewing device is left unused for some time.

Compared with the conventional technology, the present invention has the following beneficial effects.

According to the temperature pre-adjusting system for a beverage brewing device provided in the present invention, a third fluid pipeline for discharging a temperature adjusting medium and a control component for controlling on-off of a first fluid pipeline and the third fluid pipeline are disposed for a brewing unit, so that the brewing unit is preheated or pre-cooled before a beverage is brewed, to prevent an impact of an initial temperature in the brewing unit on a brewing water temperature of the beverage due to heat convection and heat conduction, so as to keep stability and consistency of taste of the beverage.

According to the temperature pre-adjusting system for a beverage brewing device provided by the present invention, one end of the third fluid pipeline is connected to the first fluid pipeline, so that part of or all of the first fluid pipeline is preheated or pre-cooled, and in addition, a switching time of the control component is delayed by using a timer or a flowmeter, so that the temperature adjusting medium in the first fluid pipeline is also discharged through the third fluid pipeline.

### BRIEF DESCRIPTION OF THE DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may derive other drawings from these accompanying drawings without creative efforts.
FIG. 1 is a schematic structural diagram according to Embodiment 1 of the present invention.
FIG. 2 is a schematic structural diagram according to Embodiment 2 of the present invention.
FIG. 3 is a schematic structural diagram of a three-way valve in Embodiment 2 of the present invention.
FIG. 4 is a schematic structural diagram according to Embodiment 3 of the present invention.
FIG. 5 is a schematic structural diagram showing that a third fluid pipeline is directly connected to a collection container according to the present invention.

Reference signs are as follows: 1. brewing unit, 2. second fluid pipeline, 3. first fluid pipeline, 30. beverage outlet, 31. first solenoid valve, 32. three-way valve, 321. first valve port, 322. second valve port, 323. third valve port, 4. third fluid pipeline, 40. fixator, 41. pump, 42. second solenoid valve, 5. valve, 6. collection container, 7. beverage cup, and a. connection point of the first fluid pipeline, and the third fluid pipeline.

### DETAILED DESCRIPTIONS OF THE EMBODIMENTS

The technical solutions in the embodiments of the present invention will be clearly and completely described by using an example in which the beverage brewing device is a coffee machine. The coffee machine is preheated by using a temperature adjusting medium before coffee is brewed, and the temperature adjusting medium used is preheated water. Apparently, the described embodiments are merely some but not all of the embodiments of the present invention. All other embodiments obtained by a person of ordinary skill in the art based on the embodiments of the present invention without paying any creative effort shall fall into the protection scope of the present invention.

For ease of description, a pipeline not explicitly specified in the following description is a general term of a brewing unit, a first fluid pipeline, a second fluid pipeline, and a third fluid pipeline through which a beverage or a temperature adjusting medium flows. During discharging of a residual liquid or a temperature adjusting medium, due to capillarity phenomenon, it is inevitable that some liquid is attached to a pipeline wall and cannot be discharged. Therefore, the description of discharging or emptying does not represent complete and absolute discharging or emptying.

### Embodiment 1:

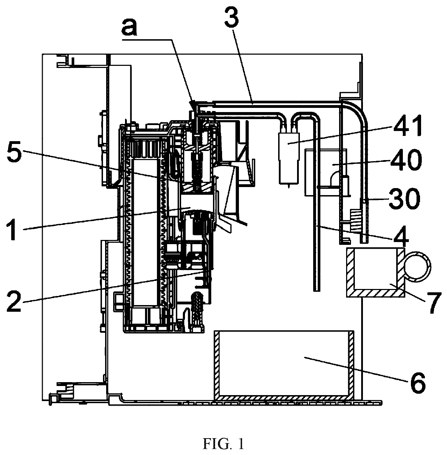

A temperature pre-adjusting system for a coffee machine shown in FIG. 1 includes a host control unit (not shown), a brewing unit 1, a first fluid pipeline 3, a second fluid pipeline 2, a third fluid pipeline 4, and a control component. One end of the first fluid pipeline 3 is connected to the brewing unit 1 and configured to output a beverage from the brewing unit 1 to a beverage outlet 30. One end of the second fluid pipeline 2 is connected to the brewing unit 1 and configured to provide preheated water for the brewing unit 1. One end of the third fluid pipeline 4 is connected to the first fluid pipeline 3 at a connection point a which is located between the brewing unit 1 and the beverage outlet 30, and a collection container 6 is provided below the other end of the third fluid pipeline 4 (corresponding to being indirectly connected to a collection container in claim 2). The third fluid pipeline 4 is clamped in a coffee machine shell by using a fixator 40 and configured to discharge residual liquid or preheated water in the brewing unit 1, and may also be configured to discharge residual liquid or preheated water in the first fluid pipeline 3. The control component is a pump 41, and the pump 41 is connected to the third fluid pipeline 4 and controlled by the host control unit. The brewing unit 1 is communicated with the first fluid pipeline 3 and the third fluid pipeline 4 through a valve 5, and a beverage cup 7 is disposed under the beverage outlet 30. During preheating, the pump 41 is started, the preheated water enters the brewing unit 1 through the second fluid pipeline 2 for preheating, and then is discharged to the collection container 6 through the third fluid pipeline 4. In this case, if residual liquid exists in the first fluid pipeline 3, the residual liquid is driven by the pump 41 to be discharged to the collection container 6.

The temperature pre-adjusting system of the embodiment is further provided with a timer, and action timing of the pump 41 is controlled by the timer. The timer is controlled by the host control unit and configured to set a specific time before coffee brewing according to a pipeline length, flow, and the like between the brewing unit 1 and the connection point a of the first fluid pipeline 3 and the third fluid pipeline 4 to delay a power-off time of the pump 41. The preheated water is discharged to the collection container 6 through the third fluid pipeline 4 in an initial set time period in a coffee output process to complete discharge of the preheated water in the first fluid pipeline 3. When the first fluid pipeline 3 needs to be preheated, the preheating water is input into the brewing unit 1 through the second fluid pipeline 2, and after the preheating water reaches the first fluid pipeline 3 through the valve 5 for preheating, the host control unit starts the pump 41 after a set time or a set flow rate is reached, to discharge the preheated water to the collection container 6.

Operation steps of the temperature pre-adjusting system are as follows:
S1: inputting preheated water into the brewing unit 1 through the second fluid pipeline 2 for preheating, where the preheated water may be hot water for brewing coffee;
S2: starting the control component, and powering on the pump 41 to discharge the preheated water through the third fluid pipeline 4 for preheating; and
S3: powering off the pump 41 to end temperature pre-adjusting.

Before step S1, the pump 41 may be powered on to discharge the residual liquid in the first fluid pipeline 3 in advance.

Power-on timing of the pump 41 may be at a moment when a temperature adjusting medium is input through the second fluid pipeline 2, or before the input temperature adjusting medium flows to the connection point a of the first fluid pipeline 3 and the third fluid pipeline 4, or may be at a moment when the input temperature adjusting medium flows through the connection point a of the first fluid pipeline 3 and the third fluid pipeline 4 and does not reach the beverage outlet 30, and in this case, the temperature adjusting medium needs to be emptied before brewing coffee.

### Embodiment 2:

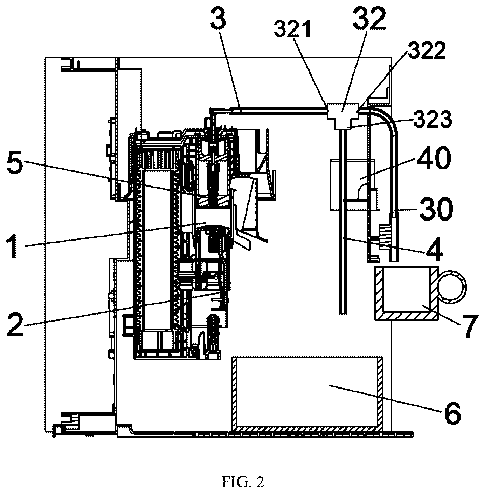

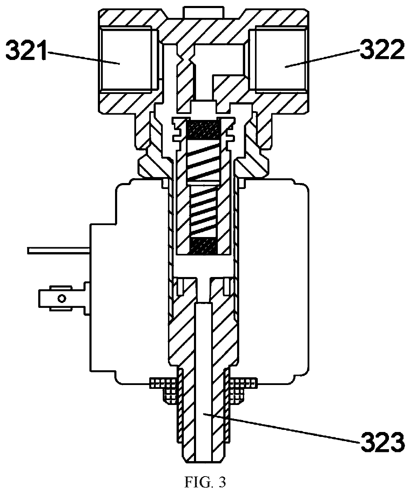

With reference to FIG. 2 and FIG. 3, a temperature pre-adjusting system for a coffee machine includes a host control unit (not shown), a brewing unit 1, a first fluid pipeline 3, a second fluid pipeline 2, a third fluid pipeline 4, and a control component. One end of the first fluid pipeline 3 is connected to the brewing unit 1 and configured to output a beverage from the brewing unit 1 to a beverage outlet 30. One end of the second fluid pipeline 2 is connected to the brewing unit 1 and configured to provide preheated water for the brewing unit 1. The control component is a three-way valve 32, one end of the third fluid pipeline 4 is connected to the first fluid pipeline 3 through the three-way valve 32, and a collection container 6 is provided below the other end of the third fluid pipeline 4 (corresponding to being indirectly connected to a collection container in claim 2). The three-way valve 32 is a two-position three-way normally-open solenoid valve, and includes a first valve port 321, a second valve port 322, and a third valve port 323. The first valve port 321 is a normally-open port and connected to one end, toward the brewing unit 1, of the first fluid pipeline 3, the second valve port 322 is connected to an end of the beverage outlet 30, and the third valve port 323 is connected to the third fluid pipeline 4. A beverage cup 7 is disposed under the beverage outlet 30.

During preheating, preheated water enters the brewing unit 1 through the second fluid pipeline 2 for preheating. The three-way valve 32 is not powered on, and a valve core is at an initial position, the second valve port 322 is closed, the third valve port 323 is opened, and the preheated water is discharged from the third fluid pipeline 4 to the collection container 6. During coffee brewing, the three-way valve 32 is powered on, the valve core moves down, the third valve port 323 is closed, the second valve port 322 is opened, and the coffee is output to the beverage cup 7 through the second valve port 322.

The temperature pre-adjusting system of the embodiment is further provided with a timer, and switching timing of the three-way valve 32 is controlled by the timer. The timer is controlled by the host control unit and configured to set a specific time before coffee brewing according to a pipeline length, flow, and the like between the brewing unit 1 and the three-way valve 32 to delay a power-on time of the three-way valve 32. The preheated water is discharged to the collection container 6 through the third fluid pipeline 4 in an initial set time period in a coffee output process to complete discharge of the preheated water in the first fluid pipeline 3.

Operation steps of the temperature pre-adjusting system are as follows:
S1: inputting preheated water into the brewing unit 1 through the second fluid pipeline 2 for preheating, where the preheated water may be hot water for brewing coffee;
S2: starting the control component and keeping the valve core in the three-way valve 32 at the initial position, where the second valve port 322 is closed, the third valve port 323 is opened, and all or part of the liquid or preheat water is discharged through the third fluid pipeline 4 to complete the preheating; and
S3: powering on the three-way valve 32, where the valve core moves down, and the third valve port 323 is closed, the preheating is finished.

Action timing of the three-way valve 32 may be at a moment when the temperature adjusting medium is input through the second fluid pipeline 2, or before the input temperature adjusting medium flows to the three-way valve 32.

### Embodiment 3:

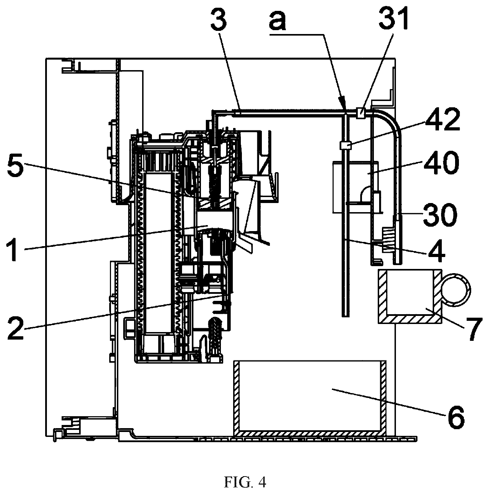

With reference to FIG. 4, a temperature pre-adjusting system for a coffee machine includes a host control unit (not shown), a brewing unit 1, a first fluid pipeline 3, a second fluid pipeline 2, a third fluid pipeline 4, and a control component. One end of the second fluid pipeline 2 is connected to the brewing unit 1 and configured to provide preheated water for the brewing unit 1. One end of the first fluid pipeline 3 and one end of the third fluid pipeline 4 are separately connected to the brewing unit 1 through a valve 5, the first fluid pipeline 3 is configured to output a beverage from the brewing unit 1 to a beverage outlet 30, and a beverage cup 7 is disposed under the beverage outlet 30. The third fluid pipeline 4 is clamped in a coffee machine shell by using a fixator 40 and configured to discharge preheated water in the brewing unit 1, and a collection container 6 is provided below the other end of the third fluid pipeline 4. The control component is two-way valves, and the two-way valves include a first solenoid valve 31 and a second solenoid valve 42. The first solenoid valve 31 is mounted on the first fluid pipeline 3, and the second solenoid valve 42 is mounted on the third fluid pipeline 4. During preheating, the first solenoid valve 31 is switched off, the second solenoid valve 42 is powered on, and the preheated water enters the brewing unit 1 through the second fluid pipeline 2 for preheating, and is discharged to the collection container 6 through the third fluid pipeline 4. During coffee brewing, the first solenoid valve 31 is powered on, the second solenoid valve 42 is switched off, and the coffee is output into the beverage cup 7 through the first fluid pipeline 3.

In the foregoing embodiment, preheated water in a section of the pipeline, located before the first solenoid valve 31, in the first fluid pipeline 3 cannot be discharged, and the first fluid pipeline 3 cannot be preheated. Therefore, preferably, as shown in FIG. 4, one end of the third fluid pipeline 4 is connected to the first fluid pipeline 3 at a connection point a which is located between the brewing unit 1 and the beverage outlet 30. In this case, the third fluid pipeline 4 is further configured to discharge the preheated water in the pipeline between the brewing unit 1 and the connection point a.

The temperature pre-adjusting system of the embodiment is further provided with a timer, and switching timing of the two-way valve is controlled by the timer. The timer is controlled by the host control unit and configured to set a specific time before coffee brewing according to a pipeline length, flow, and the like between the brewing unit 1 and the connection point a to delay a switching time of the first solenoid valve 31 and the second solenoid valve 42. The preheated water is discharged to the collection container 6 through the third fluid pipeline 4 in an initial set time period in a coffee output process.

Operation steps of the temperature pre-adjusting system are as follows:
S1: inputting preheated water into the brewing unit 1 through the second fluid pipeline 2 for preheating, where the preheated water may be hot water for brewing coffee;
S2: starting the control component, switching off the first solenoid valve 31 to make the first fluid pipeline 3 be off, and switching on the second solenoid valve 42 to discharge all or part of the liquid or preheat water through the third fluid pipeline 4 for preheating; and
S3: switching off the second solenoid valve 42 to end preheating.

Before a temperature adjusting medium is input through the second fluid pipeline 2, the first solenoid valve 31 and the second solenoid valve 42 may be switched on first, and residual liquid in the first fluid pipeline 3 is discharged in advance. In this case, one end of the third fluid pipeline 4 should be lower than the beverage outlet 30, so that the residual liquid is conveniently discharged from the third fluid pipeline 4 under its own weight.

Switching timing of the first solenoid valve 31 and the second solenoid valve 42 may be at a moment when step S1 is performed, or before the input temperature adjusting medium flows to the connection point a of the first fluid pipeline 3 and the third fluid pipeline 4, or may be at a moment when the input temperature adjusting medium flows through the connection point a of the first fluid pipeline 3 and the third fluid pipeline 4 and does not reach the beverage outlet 30, and in this case, the temperature adjusting medium needs to be emptied before brewing coffee.

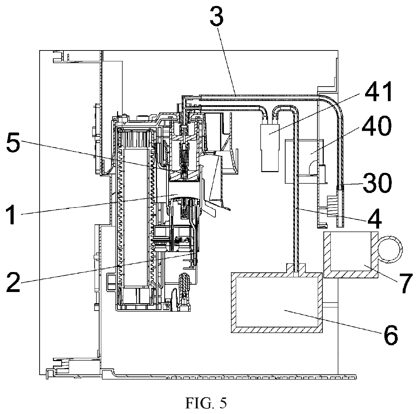

As shown in FIG. 5, in Embodiment 1, Embodiment 2, and Embodiment 3, an output port of the third fluid pipeline 4 may alternatively be directly connected to the collection container 6.

In Embodiment 1, Embodiment 2, and Embodiment 3, the timer may be replaced with a flowmeter, and the flowmeter is disposed in the third fluid pipeline 4. A specific flow is set according to a pipeline length, a flow rate, and the like between the brewing unit 1 and the connection point a of the first fluid pipeline 3 and the third fluid pipeline 4, so that all the preheated water is discharged into the collecting container 6.

In Embodiment 1, Embodiment 2, and Embodiment 3, to ensure that a temperature in the brewing unit 1 or the first fluid pipeline 3 reaches a set value after preheating, a temperature sensor may be disposed in the brewing unit 1 or the first fluid pipeline 3, and preheating water is continuously input through the second fluid pipeline 2 based on a real-time temperature, so as to ensure a preheating effect.

In the above embodiments, a coffee machine is used for implementing preheating and temperature adjusting. For a possible refrigeration requirement of another beverage machine, the pre-heating water is replaced with ice water or another cold medium.

The temperature pre-adjusting system for a beverage brewing device and the operation method thereof provided in the present invention are described above in detail, and specific examples are used herein to describe the structure and operation principle of the present invention. The description of the foregoing embodiments is merely used to help understand the method and core idea of the present invention.

## Claims

1. A temperature pre-adjusting system for a beverage brewing device, **characterized by**, comprising a host control unit, a brewing unit (1), and a first fluid pipeline (3), wherein one end of the first fluid pipeline (3) is connected to the brewing unit (1) and configured to output a beverage from the brewing unit (1) to a beverage outlet (30), and the temperature pre-adjusting system further comprises a second fluid pipeline (2), a third fluid pipeline (4), and a control component, wherein one end of the second fluid pipeline (2) is connected to the brewing unit (1) and configured to provide a temperature adjusting medium for the brewing unit (1); one end of the third fluid pipeline (4) is connected to the brewing unit (1) or the first fluid pipeline (3) and configured to discharge the temperature adjusting medium that has performed a temperature adjusting function; and the control component is connected to a pipeline and configured to control on-off of the first fluid pipeline (3) and the third fluid pipeline (4), and the control component is controlled by the host control unit;
wherein one end of the third fluid pipeline (4) is connected to the first fluid pipeline (3) at a connection point which is located between the brewing unit (1) and the beverage outlet (30), and the other end is directly or indirectly connected to a collection container (6);
**characterized in that** the control component is a pump (41), and the pump (41) is disposed on the third fluid pipeline (4);
and **in that** the temperature pre-adjusting system is further provided with a flowmeter, the flowmeter is disposed on the third fluid pipeline (4), and the host control unit controls the pump (41) by setting a preset flow, so as to control an on-off switching time of the first fluid pipeline (3) and the third fluid pipeline (4).

2. The temperature pre-adjusting system for a beverage brewing device according to claim 1, wherein the second fluid pipeline (2) is configured to provide the temperature adjusting medium for the brewing unit (1) and the first fluid pipeline (3).

3. The temperature pre-adjusting system for a beverage brewing device according to claim 2, wherein the third fluid pipeline (4) is configured to discharge the temperature adjusting medium in a pipeline between the brewing unit (1) and the connection point of the first fluid pipeline (3) and the third fluid pipeline (4).

4. A temperature pre-adjusting method of the temperature pre-adjusting system for a beverage brewing device according to any one of claims 1 to 3, **characterized by**, comprising the following steps:
S1: inputting the temperature adjusting medium into the brewing unit (1) through the second fluid pipeline (2) for performing temperature pre-adjusting;
S2: starting the control component to make the first fluid pipeline (3) be off and the third fluid pipeline (4) be on, and discharging liquid or the temperature adjusting medium by using the third fluid pipeline (4) to implement temperature pre-adjusting; and
S3: making the third fluid pipeline (4) be off to end temperature pre-adjusting,
wherein the host control unit controls the control component by setting a preset flow, so as to control an on-off switching time of the first fluid pipeline (3) and the third fluid pipeline (4).

5. The temperature pre-adjusting method of the temperature pre-adjusting system for a beverage brewing device according to claim 4, wherein before step S1, pre-discharging residual liquid in the first fluid pipeline (3).

6. The temperature pre-adjusting method of the temperature pre-adjusting system for a beverage brewing device according to claim 4 or 5, wherein action timing of the control component is at a moment when step S1 is performed or before the input temperature adjusting medium flows to the connection point of the first fluid pipeline (3) and the third fluid pipeline (4).

7. The temperature pre-adjusting method of the temperature pre-adjusting system for a beverage brewing device according to claim 4 or 5, wherein action timing of the control component is at a moment when the input temperature adjusting medium flows through the connection point of the first fluid pipeline (3) and the third fluid pipeline (4), and does not reach the beverage outlet.

8. The temperature pre-adjusting method of the temperature pre-adjusting system for a beverage brewing device according to claim 7, wherein the action timing of the control component is controlled by the flowmeter.

9. A beverage brewing device, **characterized by**, comprising the temperature pre-adjusting system for a beverage brewing device according to any one of claims 1 to 3.

## Patentansprüche

1. Ein Temperaturvoranpasssystem für eine Getränkebrühvorrichtung, **gekennzeichnet durch** Beinhalten einer Host-Steuereinheit, einer Brüheinheit (1) und einer ersten Fluidleitung (3), wobei ein Ende der ersten Fluidleitung (3) mit der Brüheinheit (1) verbunden ist und dazu konfiguriert ist, ein Getränk von der Brüheinheit (1) an einen Getränkeauslass (30) auszugeben, und das Temperaturvoranpasssystem ferner eine zweite Fluidleitung (2), eine dritte Fluidleitung (4) und eine Steuerkomponente beinhaltet, wobei ein Ende der zweiten Fluidleitung (2) mit der Brüheinheit (1) verbunden ist und dazu konfiguriert ist, ein Temperaturanpassmedium für die Brüheinheit (1) bereitzustellen; ein Ende der dritten Fluidleitung (4) mit der Brüheinheit (1) oder der ersten Fluidleitung (3) verbunden ist und dazu konfiguriert ist, das Temperaturanpassmedium, das eine Temperaturanpassfunktion durchgeführt hat, auszustoßen; und die Steuerkomponente mit einer Leitung verbunden ist und dazu konfiguriert ist, das Ein- und Ausschalten der ersten Fluidleitung (3) und der dritten Fluidleitung (4) zu steuern, und die Steuerkomponente von der Hauptsteuereinheit gesteuert wird;
wobei ein Ende der dritten Fluidleitung (4) mit der ersten Fluidleitung (3) an einer Verbindungsstelle verbunden ist, die sich zwischen der Brüheinheit (1) und dem Getränkeauslass (30) befindet, und das andere Ende direkt oder indirekt mit einem Sammelbehälter (6) verbunden ist;
**dadurch gekennzeichnet, dass** die Steuerkomponente eine Pumpe (41) ist und die Pumpe (41) an der dritten Fluidleitung (4) angeordnet ist;
und **dadurch, dass** das Temperaturvoranpasssystem ferner mit einem Durchflussmesser versehen ist, der Durchflussmesser an der dritten Fluidleitung (4) angeordnet ist und die Host-Steuereinheit die Pumpe (41) durch Einstellen eines voreingestellten Durchflusses steuert, um eine Ein-Aus-Schaltzeit der ersten Fluidleitung (3) und der dritten Fluidleitung (4) zu steuern.

2. Temperaturvoranpasssystem für eine Getränkebrühvorrichtung gemäß Anspruch 1, wobei die zweite Fluidleitung (2) dazu konfiguriert ist, das Temperaturanpassmedium für die Brüheinheit (1) und die erste Fluidleitung (3) bereitzustellen.

3. Temperaturvoranpasssystem für eine Getränkebrühvorrichtung gemäß Anspruch 2, wobei die dritte Fluidleitung (4) dazu konfiguriert ist, das Temperaturanpassmedium in eine Leitung zwischen der Brüheinheit (1) und der Verbindungsstelle der ersten Fluidleitung (3) und der dritten Fluidleitung (4) auszustoßen.

4. Ein Temperaturvoranpassverfahren des Temperaturvoranpasssystems für eine Getränkebrühvorrichtung gemäß einem der Ansprüche 1 bis 3, **gekennzeichnet durch** das Beinhalten der folgenden Schritte:
S1: Eingeben des Temperaturanpassmediums in die Brüheinheit (1) durch die zweite Fluidleitung (2) zum Durchführen des Temperaturvoranpassens;
S2: Starten der Steuerkomponente, um die erste Fluidleitung (3) abzuschalten und die dritte Fluidleitung (4) einzuschalten, und Ausstoßen von Flüssigkeit oder des Temperaturanpassmediums unter Verwendung der dritten Fluidleitung (4), um eine Temperaturvoranpassung umzusetzen; und
S3: Ausschalten der dritten Fluidleitung (4), um die Temperaturvoranpassung zu beenden,
wobei die Host-Steuereinheit die Steuerkomponente durch Einstellen eines voreingestellten Durchflusses steuert, um eine Ein-Aus-Schaltzeit der ersten Fluidleitung (3) und der dritten Fluidleitung (4) zu steuern.

5. Temperaturvoranpassverfahren des Temperaturvoranpasssystems für eine Getränkebrühvorrichtung gemäß Anspruch 4, wobei vor Schritt S1 Restflüssigkeit in der ersten Fluidleitung (3) vorher ausgestoßen wird.

6. Temperaturvoranpassverfahren des Temperaturvoranpasssystems für eine Getränkebrühvorrichtung gemäß Anspruch 4 oder 5, wobei der Eingriffszeitpunkt der Steuerkomponente zu einem Zeitpunkt liegt, zu dem Schritt S1 durchgeführt wird oder bevor das Eingangstemperaturanpassmedium zu der Verbindungsstelle der ersten Fluidleitung (3) und der dritten Fluidleitung (4) fließt.

7. Temperaturvoranpassverfahren des Temperaturvoranpasssystems für eine Getränkebrühvorrichtung gemäß Anspruch 4 oder 5, wobei der Eingriffszeitpunkt der Steuerkomponente zu einem Zeitpunkt liegt, zu dem das Eingangstemperaturanpassmedium durch die Verbindungsstelle der ersten Fluidleitung (3) und der dritten Fluidleitung (4) fließt und den Getränkeauslass nicht erreicht.

8. Temperaturvoranpassverfahren des Temperaturvoranpasssystems für eine Getränkebrühvorrichtung gemäß Anspruch 7, wobei der Eingriffszeitpunkt der Steuerkomponente durch den Durchflussmeter gesteuert wird.

9. Eine Getränkebrühvorrichtung, **gekennzeichnet durch** das Beinhalten eines Temperaturvoranpasssystems für eine Getränkebrühvorrichtung gemäß einem der Ansprüche 1 bis 3.

## Revendications

1. Un système de préajustement de température pour dispositif d'infusion de boisson, **caractérisé par le fait qu'**il comprend une unité de commande hôte, une unité d'infusion (1), et une première conduite de fluide (3), une extrémité de la première conduite de fluide (3) étant raccordée à l'unité d'infusion (1) et configurée pour délivrer une boisson provenant de l'unité d'infusion (1) à un orifice de sortie de boisson (30), et le système de préajustement de température comprenant en outre une deuxième conduite de fluide (2), une troisième conduite de fluide (4), et un composant de commande, une extrémité de la deuxième conduite de fluide (2) étant raccordée à l'unité d'infusion (1) et configurée pour fournir un milieu d'ajustement de température à l'unité d'infusion (1) ; une extrémité de la troisième conduite de fluide (4) étant raccordée à l'unité d'infusion (1) ou à la première conduite de fluide (3) et configurée pour évacuer le milieu d'ajustement de température qui a rempli une fonction d'ajustement de température ; et le composant de commande étant raccordé à une conduite et configuré pour commander l'ouverture-fermeture de la première conduite de fluide (3) et de la troisième conduite de fluide (4), et le composant de commande étant commandé par l'unité de commande hôte ;
dans lequel une extrémité de la troisième conduite de fluide (4) est raccordée à la première conduite de fluide (3) en un point de raccordement qui est situé entre l'unité d'infusion (1) et l'orifice de sortie de boisson (30), et l'autre extrémité est raccordée directement ou indirectement à un récipient de collecte (6) ;
**caractérisé en ce que** le composant de commande est une pompe (41), et la pompe (41) est disposée sur la troisième conduite de fluide (4) ;
en **en ce que** le système de préajustement de température est en outre pourvu d'un débitmètre, le débitmètre est disposé sur la troisième conduite de fluide (4), et l'unité de commande hôte commande la pompe (41) en réglant un débit préréglé, de façon à commander un temps de basculement ouverture-fermeture de la première conduite de fluide (3) et de la troisième conduite de fluide (4).

2. Le système de préajustement de température pour dispositif d'infusion de boisson selon la revendication 1, dans lequel la deuxième conduite de fluide (2) est configurée pour fournir le milieu d'ajustement de température à l'unité d'infusion (1) et à la première conduite de fluide (3).

3. Le système de préajustement de température pour dispositif d'infusion de boisson selon la revendication 2, dans lequel la troisième conduite de fluide (4) est configurée pour évacuer le milieu d'ajustement de température présent dans une conduite entre l'unité d'infusion (1) et le point de raccordement de la première conduite de fluide (3) et de la troisième conduite de fluide (4).

4. Un procédé de préajustement de température du système de préajustement de température pour dispositif d'infusion de boisson selon l'une quelconque des revendications 1 à 3, **caractérisé par le fait qu'**il comprend les étapes suivantes :
S1 : introduire le milieu d'ajustement de température dans l'unité d'infusion (1) par l'intermédiaire de la deuxième conduite de fluide (2) pour effectuer un préajustement de température ;
S2 : faire démarrer le composant de commande pour amener la première conduite de fluide (3) à être fermée et la troisième conduite de fluide (4) à être ouverte, et évacuer du liquide ou le milieu d'ajustement de température en utilisant la troisième conduite de fluide (4) pour mettre en œuvre un préajustement de température ; et
S3: amener la troisième conduite de fluide (4) à être fermée pour mettre fin au préajustement de température,
dans lequel l'unité de commande hôte commande le composant de commande en réglant un débit préréglé, de façon à commander un temps de basculement ouverture-fermeture de la première conduite de fluide (3) et de la troisième conduite de fluide (4).

5. Le procédé de préajustement de température du système de préajustement de température pour dispositif d'infusion de boisson selon la revendication 4, dans lequel avant l'étape S1, du liquide résiduel présent dans la première conduite de fluide (3) est préalablement évacué.

6. Le procédé de préajustement de température du système de préajustement de température pour dispositif d'infusion de boisson selon la revendication 4 ou la revendication 5, dans lequel un instant d'action du composant de commande est à un moment où l'étape S1 est effectuée ou avant que le milieu d'ajustement de température introduit n'ait circulé jusqu'au point de raccordement de la première conduite de fluide (3) et de la troisième conduite de fluide (4).

7. Le procédé de préajustement de température du système de préajustement de température pour dispositif d'infusion de boisson selon la revendication 4 ou la revendication 5, dans lequel un instant d'action du composant de commande est à un moment où le milieu d'ajustement de température introduit circule à travers le point de raccordement de la première conduite de fluide (3) et de la troisième conduite de fluide (4), et n'a pas atteint l'orifice de sortie de boisson.

8. Le procédé de préajustement de température du système de préajustement de température pour dispositif d'infusion de boisson selon la revendication 7, dans lequel l'instant d'action du composant de commande est commandé par le débitmètre.

9. Un dispositif d'infusion de boisson, **caractérisé par le fait qu'**il comprend le système de préajustement de température pour dispositif d'infusion de boisson selon l'une quelconque des revendications 1 à 3.
